(19) Europäisches Patentamt / European Patent Office / Office européen des brevets

(11) **EP 2 397 604 A1**

(12) **EUROPEAN PATENT APPLICATION**
published in accordance with Art. 153(4) EPC

(43) Date of publication:
**21.12.2011 Bulletin 2011/51**

(51) Int Cl.:
**D06M 11/71** (2006.01)   **D06M 11/46** (2006.01)
**D06M 11/57** (2006.01)   **D06M 14/22** (2006.01)
**D06M 15/263** (2006.01)   **D06M 15/267** (2006.01)

(21) Application number: **10741276.9**

(22) Date of filing: **12.02.2010**

(86) International application number:
**PCT/JP2010/052014**

(87) International publication number:
**WO 2010/092999 (19.08.2010 Gazette 2010/33)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **13.02.2009 JP 2009031931**

(71) Applicants:
• **Shinshu University**
**Matsumoto-shi, Nagano 390-8621 (JP)**
• **Kurashiki Boseki Kabushiki Kaisha**
**Kurashiki-shi**
**Okayama 710-0054 (JP)**

(72) Inventors:
• **USAMI, Hisanao**
**Ueda-shi**
**Nagano 386-8567 (JP)**
• **SUZUKI, Eiji**
**Ueda-shi**
**Nagano 386-8567 (JP)**
• **AKAIWA, Kouta**
**Ueda-shi**
**Nagano 386-8567 (JP)**
• **OHSHIMA, Kunihiro**
**Neyagawa-shi**
**Osaka 572-0823 (JP)**

(74) Representative: **Duckworth, Timothy John**
**J.A. Kemp & Co.**
**14 South Square**
**Gray's Inn**
**London WC1R 5JJ (GB)**

(54) **FIBER PRODUCT WHICH SUPPORTS PHOTOCATALYST, AND METHOD FOR PRODUCING SAME**

(57)   Provided is a fiber product having a superior photocatalyst function, as well as the original texture of the fiber. Further provided is a fiber product having a photocatalyst function superior in washing durability that resists degradation even after repeated washing, as well as the original texture of the fiber.

A fiber product wherein a zirconium phosphate layer 2 is electrostatically fixed on a fiber substrate 1, and a photocatalyst 3 is electrostatically fixed on the surface of the zirconium phosphate layer 2. Preferably, a fiber product having a zirconium phosphate layer 2 and a zirconium phosphate multilayer 10 laminated via an aluminum ion or a polyaluminum ion 4, a zirconium phosphate layer 2a, which is the innermost layer of the zirconium phosphate multilayer 10, is electrostatically fixed on a fiber substrate 1 via an aluminum ion or a polyaluminum ion 4, and a photocatalyst 3 is electrostatically fixed on a zirconium phosphate layer 2b, which is the outermost layer of the zirconium phosphate multilayer 10.

FIG. 3

**Description**

Technical Field

The present invention relates to a fiber product carrying a photocatalyst and a production method thereof, and particularly relates to a fiber product having a photocatalyst function superior in washing durability.

Background Art

It has been actively performed in recent years to impart a sterilizing effect, a bacteria elimination effect or an antifungal effect to fiber products such as fabric, knitted fabric, non-woven fabric and the like, by carrying the photocatalyst on the fiber products. The photocatalyst present on the fiber surface absorbs ultraviolet rays and exerts strong oxidizability, decomposes contaminant substances and odor, and expresses a sterilizing effect, a bacteria elimination effect or an antifungal effect. However, it is known when a photocatalyst that expresses strong oxidizability such as titanium oxide and the like is used, it damages the fiber itself which constitutes the fiber product, thus decreasing the strength and degrading the property of the fiber itself.

Thus, various techniques for separating a photocatalyst such as titanium oxide and the like from a fiber substrate have been suggested. For example, patent document 1 proposes a technique of covering titanium oxide with porous calcium phosphate and fixing same on a fiber with a binder made of a melamine resin, and patent document 2 proposes a technique of adhering a transparent corrosion-resistant coat made of a fluororesin to a fiber substrate, and forming a photocatalyst layer as the outer layer of the corrosion-resistant coat. However, in all of these proposals, since the surface of the fiber constituting the fiber substrate is ultimately covered with a resin, the original texture of the fiber product is impaired.

[Document List]

[patent documents]

      patent document 1: JP-A-2000-119957
      patent document 2: JP-A-H10-216210

[SUMMARY OF THE INVENTION]

Problems to be Solved by the Invention

Therefore, the problem to be solved by the present invention is to provide a fiber product having a superior photocatalyst function, preventive of optical damage to a fiber substrate, and also having the original handling touch of the fiber, and a production method thereof.
In addition, it is to provide a fiber product having a superior photocatalyst function, washing durability resisting decrease of the superior photocatalyst function even by repeated washing, and also having the original texture of the fiber, and a production method thereof.

Means of Solving the Problems

The present inventors have conducted various studies in an attempt to solve the above-mentioned problems and found that

      (a) crystalline zirconium phosphate (CZP) represented by the composition formula $Zr(HPO_4)nH_2O$ (n=0 - 8) has a layer structure formed by plate-like polymers represented by $[Zr_n(PO_4)_{2n}]^{2n-}$ laminated on top of one another, and when crystalline zirconium phosphate (CZP) is dispersed in water to perform ion exchange by an alkaline substance, each plate-like polymer ($[Zr_n(PO_4)_{2n}]^{2n-}$, hereinafter sometimes to be referred to as "zirconium phosphate layer") is exfoliated to give a zirconium phosphate single layer exfoliation dispersion liquid,
      (b) when a fiber substance is contacted with the zirconium phosphate single layer exfoliation dispersion liquid, the zirconium phosphate layer can be electrostatically bound to the fiber substance,
      (c) when the zirconium phosphate layer is contacted with an aqueous dispersion liquid of a photocatalyst, the photocatalyst can be electrostatically fixed (preferably fixed electrostatically and like a covalent bond) on the zirconium phosphate layer,

(d) when a fiber substance having an anionic group or a cationic group introduced into a fiber surface is contacted with an aqueous solution of a water-soluble aluminum compound such as alum aqueous solution and the like, and further contacted with a zirconium phosphate single layer exfoliation dispersion liquid, the zirconium phosphate layer can be more strongly bound electrostatically to the fiber substance via an aluminum ion or a polyaluminum ion, and

(e) when a zirconium phosphate layer is laminated in multiplicity with an aluminum ion or a polyaluminum ion as a binder, the adjacent interlayers can be strongly bound electrostatically to give a structurally stable laminate. Further studies based on such findings have resulted in the completion of the present invention.

Accordingly, the present invention provides the following.

(1) A fiber product carrying a photocatalyst, which comprises a fiber substrate, a zirconium phosphate layer electrostatically fixed thereon, and a photocatalyst electrostatically fixed on a surface of the zirconium phosphate layer.

(2) The fiber product of the above-mentioned (1), comprising an aluminum ion or a polyaluminum ion between the zirconium phosphate layer and the fiber substrate.

(3) A fiber product carrying a photocatalyst, which comprises a fiber substrate, a zirconium phosphate multilayer electrostatically fixed thereon, the multilayer comprising at least one lamination part comprising two zirconium phosphate layers laminated via an aluminum ion or a polyaluminum ion, and a photocatalyst electrostatically fixed on a zirconium phosphate layer, which is the outermost layer of the zirconium phosphate multilayer.

(4) The fiber product of the above-mentioned (3), comprising an aluminum ion or a polyaluminum ion between the zirconium phosphate multilayer and the fiber substrate.

(5) The fiber product of any of the above-mentioned (1) to (4), wherein the photocatalyst is titanium oxide.

(6) The fiber product of any of the above-mentioned (1) to (5), wherein the fiber substrate has a fiber surface that underwent an anionic group introduction treatment.

(7) The fiber product of the above-mentioned (6), wherein the anionic group is a phosphate group, a carboxyl group or a hydroxyl group.

(8) The fiber product of any of the above-mentioned (1) to (5), wherein the fiber substrate has a fiber surface that underwent a cationic group introduction treatment.

(9) The fiber product of the above-mentioned (8), wherein the cationic group is a quaternary ammonium salt group.

(10) A method of producing a fiber product carrying a photocatalyst, comprising at least a first step for producing a composite of a fiber substrate and a zirconium phosphate layer integrated directly or via an aluminum ion or a polyaluminum ion, comprising, with or without immersing the fiber substrate in an aqueous solution of a water-soluble aluminum compound and washing the substrate with water, immersing the fiber substrate in a zirconium phosphate single layer exfoliation dispersion liquid, washing the substrate with water, and drying the substrate, and a second step of immersing the aforementioned composite in an aqueous photocatalyst dispersion liquid wherein the photocatalyst is positively charged and dispersed, washing the composite with water, and drying and sintering the composite.

(11) A method of producing a fiber product carrying a photocatalyst, comprising at least a first step for producing a composite wherein a zirconium phosphate multilayer comprising at least one lamination part comprising two zirconium phosphate layers laminated via an aluminum ion or a polyaluminum ion is integrated with a fiber substrate via an aluminum ion or a polyaluminum ion, comprising alternately repeating a first work comprising immersing the fiber substrate in an aqueous solution of a water-soluble aluminum compound and washing the substrate with water, and a second work comprising immersing the fiber substrate in a zirconium phosphate single layer exfoliation dispersion liquid and washing the substrate with water, such that the second work is performed at least two times, and drying the fiber substrate obtained from the second work as the last work, and a second step of immersing the aforementioned composite in an aqueous photocatalyst dispersion liquid wherein the photocatalyst is positively charged and dispersed, washing the composite with water, and drying and sintering the composite.

(12) The production method of the above-mentioned (10) or (11), wherein the fiber substrate has a fiber surface that underwent an anionic group introduction treatment.

(13) The production method of the above-mentioned (12), wherein the anionic group is a phosphate group, a carboxyl group or a hydroxyl group.

(14) The production method of the above-mentioned (10) or (11), wherein the fiber substrate has a fiber surface that underwent a cationic group introduction treatment.

(15) The production method of the above-mentioned (14), wherein the cationic group is a quaternary ammonium salt group.

(16) The production method of the above-mentioned (10) to (15), wherein the water-soluble aluminum compound is alum.

Effect of the Invention

In the fiber product carrying a photocatalyst of the present invention, the property of the fiber is not easily altered and the original fiber texture can be maintained, since zirconium phosphate and water-soluble aluminum compound to be in contact with the fiber substrate in a final product or in a production stage thereof are comparatively inactive. Moreover, since the photocatalyst on the outermost part is free of attachment of a resin etc., the photocatalyst function thereof (conferring sterilizing effect, bacteria elimination effect or antifungal effect etc.) is efficiently exhibited.

In addition, a photocatalyst coating layer having high washing fastness can be formed on the outermost surface, since the photocatalyst is fixed electrostatically and like a covalent bond on a zirconium phosphate layer (or zirconium phosphate multilayer). Furthermore, the zirconium phosphate layer (or zirconium phosphate multilayer) and the fiber substrate are strongly bound due to the presence of an aluminum ion or a polyaluminum ion between the zirconium phosphate layer (or zirconium phosphate multilayer) and the fiber substrate. Therefore, the zirconium phosphate layer (or zirconium phosphate multilayer) does not drop off with ease from the fiber substrate (that is, the photocatalyst resists falling out from the product) even after washing the fiber product. As a result, high washing durability can be achieved.

Moreover, when a photocatalyst is fixed on the outermost zirconium phosphate multilayer, the fiber substrate is still less influenced by the oxidizability of the photocatalyst. Furthermore, since the weatherability of the fiber substrate itself is enhanced and the fiber substrate is made harder to degrade, the washing durability is still more improved.

Brief Description of the Drawings

Fig. 1 is a schematic sectional view of a first embodiment of the fiber product carrying a photocatalyst of the present invention.

Fig. 2 is a schematic sectional view of a second embodiment of the fiber product carrying a photocatalyst of the present invention.

Fig. 3 is a schematic sectional view of a third embodiment of the fiber product carrying a photocatalyst of the present invention.

[Description of Embodiments]

The present invention is explained in the following by referring to preferable embodiments thereof.

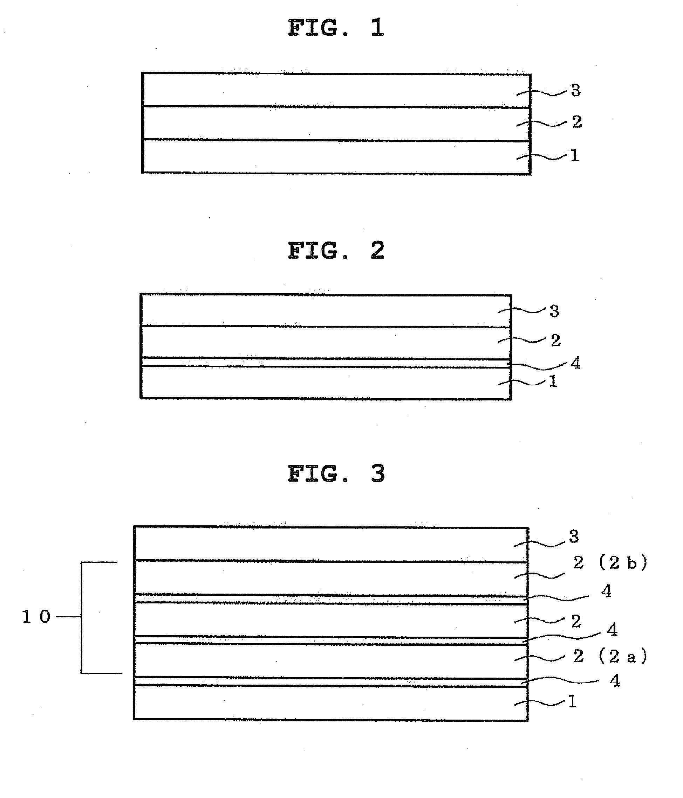

Figs. 1 - 3 are sectional views schematically showing the first - third embodiments, respectively, of the fiber product carrying a photocatalyst of the present invention (hereinafter to be also simply abbreviated as "fiber product").

The fiber product in the first embodiment (Fig. 1) has a constitution wherein a zirconium phosphate layer 2 is electrostatically fixed on a fiber substrate 1, and a photocatalyst 3 is electrostatically fixed on a surface of the zirconium phosphate layer 2.

The fiber product in the second embodiment (Fig. 2) is different from the fiber product in the first embodiment in the presence of an aluminum ion or polyaluminum ion 4 between the fiber substrate 1 and the zirconium phosphate layer 2.

The fiber product in the third embodiment (Fig. 3) has a constitution wherein a zirconium phosphate multilayer 10 containing at least one lamination part comprising two zirconium phosphate layers 2 laminated via an aluminum ion or polyaluminum ion 4 is present, a zirconium phosphate layer 2a, which is the innermost layer of zirconium phosphate multilayer 10, is electrostatically fixed via an aluminum ion or polyaluminum ion 4 on the fiber substrate 1, and a photocatalyst 3 is electrostatically fixed on a zirconium phosphate layer 2b, which is the outermost layer of the zirconium phosphate multilayer 10.

Figs. 1 - 3 are drawings simplified for convenient explanations, and a photocatalyst processing has been applied to only one of the principal planes of the fiber substrate 1. In practice, the both principal planes of the fiber substrate 1 are sometimes subjected to a photocatalyst processing (fixing of zirconium phosphate layer, photocatalyst etc.); and a photocatalyst processing (fixing of zirconium phosphate layer, photocatalyst etc.) is sometimes applied partially rather than entirely to the fiber substrate 1 according to the form and use of the fiber product.

[Zirconium phosphate layer]

As mentioned above, the "zirconium phosphate layer" in the present invention is a single layer of plate-like polymers ($[Zr_n(PO_4)_{2n}]^{2n-}$) exfoliated from crystalline zirconium phosphate (CZP) having a layer structure. The zirconium phosphate layer can be obtained by, for example, dispersing crystalline zirconium phosphate ($Zr(HPO_4) \cdot nH_2O$ (n=0 - 8)) having a layer structure in water by shaking, further exchanging ion with an alkali agent comprising hydroxide of tetraalkylammonium (e.g., tetramethylammonium, tetraethylammonium, tetrapropylammonium, tetrabutylammonium etc.) and the like, and preparing a zirconium phosphate single layer exfoliation dispersion liquid wherein each zirconium phosphate layer ($[Zr_n(PO_4)_{2n}]^{2n-}$) has been exfoliated from crystalline zirconium phosphate (CZP). Specifically, for example, 0.5M aqueous tetra-n-butylammonium solution (1 mL) is slowly added dropwise to aqueous dispersion liquid of crystalline zirconium phosphate (0.15 g/20 mL dispersion liquid) while maintaining at pH 8. The finally obtained solution is left standing and centrifuged (3000 rpm, about 10 min), and the supernatant is recovered as an exfoliation dispersion liquid.

Crystalline zirconium phosphate (CZP) is known to include type-$\alpha$ ($Zr(HPO_4)_2\cdot 2H_2O$) and type-$\gamma$ ($Zr(PO_4)$ $(H_2PO_4)\cdot 2H_2O$). The type-$\gamma$ shows structurally large interlayer distance of valences, and interlayers can be intercalated with $Na^+$ - $Cs^+$. On the other hand, the type-$\alpha$ shows somewhat narrow interlayer distances, and intercalation of interlayer is relatively difficult to occur. The type-$\gamma$ has partial structures of phosphoric acid ion and phosphoric acid dihydrogen ion. On the other hand, since the type-$\alpha$ consists only of a partial structure of phosphoric acid hydrogen ion, the charge density of the layer surface is more uniform, and ion adsorption is also considered to be homogeneous and equally distributed. Therefore, a stronger binding can be expected. Therefore, a zirconium phosphate layer exfoliated from the type-$\alpha$ crystalline zirconium phosphate is preferably used.

In the aforementioned zirconium phosphate single layer exfoliation dispersion liquid, the zirconium phosphate layer ($[Zr_n(PO_4)_{2n}]^{2n-}$) is negatively charged and dispersed in water. When a fiber substance positively charged in water is contacted with the dispersion liquid, the zirconium phosphate layer is electrostatically bound to and fixed on the fiber substrate.

In the fiber product of the present invention, the fiber substrate 1 is protected from the oxidizability of the photocatalyst 3, since the zirconium phosphate layer 2 is present between the fiber substrate 1 and the photocatalyst 3. However, the thickness of the zirconium phosphate layer (single layer) 2 is about 0.75 nm. Therefore, an embodiment wherein aluminum ion or polyaluminum ion 4 is interposed between fiber substrate 1 and zirconium phosphate layer 2 (see Figs. 2 and 3), and/or an embodiment wherein a zirconium phosphate multilayer 10 wherein zirconium phosphate layers 2 are laminated in multiplicity via aluminum ion or polyaluminum ion 4 (see Fig. 3) is employed, whereby the distance between a photocatalyst 3 and a fiber substrate 1 becomes large, an effect of protecting fiber substrate 1 from oxidizability of the photocatalyst 3 can be further enhanced, and the degradation of the fiber substrate is suppressed at a higher level. In this way, the binding force of zirconium phosphate layer 2 (or zirconium phosphate multilayer 10) to fiber substrate 1 is stably maintained, and washing durability of the product is improved more.

[Aluminum ion or polyaluminum ion]

As mentioned above, in the fiber product of the present invention, an aluminum ion or polyaluminum ion is interposed between a fiber substrate and a zirconium phosphate interlayer, and a zirconium phosphate multilayer containing zirconium phosphate layers laminated via an aluminum ion or polyaluminum ion are used. Aluminum ion and polyaluminum ion are supplied by contacting aqueous solution of a water-soluble aluminum compound such as alum and the like to a fiber substrate and a zirconium phosphate layer, and drying them. Since an aluminum ion or polyaluminum ion is interposed between a fiber substrate and a zirconium phosphate layer, the fiber substrate and the zirconium phosphate layer are more strongly bound electrostatically. This is considered to be attributable to a complex formed by an aluminum ion or polyaluminum ion and a phosphate group in zirconium phosphate. In addition, since a complex of an aluminum ion or polyaluminum ion and a phosphate group in zirconium phosphate is also formed in the zirconium phosphate multilayer, the adjacent zirconium phosphate interlayers are strongly bound electrostatically.

Examples of the water-soluble aluminum compound, which is the supply source of aluminum ion and polyaluminum ion, include alum, polyaluminum sulfate, aluminum sulfate, aluminum chloride, polyaluminum chloride and the like. Of these, alum is preferable since an aqueous solution free of precipitation in the range of slightly alkaline - neutral - slightly acidic can be obtained. Examples of alum containing aluminum include potash alum ($AlK(SO_4)_2\cdot 12H_2O$), ammonium alum ($AlNH_4(SO_4)_2\cdot 12H_2O$), sodium alum ($AlNa(SO_4)_2\cdot 12H_2O$) and the like. From the aspect of affinity for zirconium phosphate, potash alum ($AlK(SO_4)_2\cdot 12H_2O$) is preferable.

When the amount of aluminum ion or polyaluminum ion to be interposed between a fiber substrate and a zirconium phosphate interlayer, and between the adjacent zirconium phosphate interlayers in a zirconium phosphate multilayer is too small, the binding force between the fiber substrate and the zirconium phosphate interlayer and between the adjacent zirconium phosphate interlayers tends to decrease. When the amount is too high, aluminum ion and polyaluminum ion per se easily drop off from the fiber substrate or zirconium phosphate layer 2. Thus, the amount of aluminum ion or polyaluminum ion to be interposed is preferably 10 - 100 $\mu g/m^2$, more preferably 30 - 75 $\mu g/m^2$.

[Zirconium phosphate multilayer]

In a zirconium phosphate multilayer 10, an aluminum ion or a polyaluminum ion is present between the adjacent zirconium phosphate layers 2. Therefore, it is a structurally stable laminate wherein the adjacent zirconium phosphate layers are strongly bound electrostatically. While the number of zirconium phosphate layers 2 in the zirconium phosphate multilayer 10 is not particularly limited, it is generally preferably about 2 - 100, more preferably about 5 - 10. That is, since the thickness of one layer of the zirconium phosphate layer is about 0.75 nm as mentioned above, the total thickness of the zirconium phosphate multilayer 10 is preferably about 2 - 500 nm, more preferably about 3 - 100 nm, particularly preferably about 5 - 50 nm, in consideration of the thickness of aluminum ion or polyaluminum ion present in the interlayer gap. When the total thickness is less than 2 nm, the ability to prevent damage on a substrate due to oxidizability of a photocatalyst may become insufficient. When it is greater than 500 nm, the original texture of a fiber substrate may be impaired, and washing durability may decrease since zirconium phosphate multilayer 10 is easily exfoliated.

[Fiber substrate]

In the fiber product of the present invention, the fiber substrate is monofilament, twisted thread, composite thread, hollow fiber, short fiber, fabric, knitted fabric, net, non-woven fabric, cotton and the like, which are made of various natural fibers and/or synthetic fibers, where the kind of the fiber and form of the substrate are not particularly limited.
Examples of the natural fiber include cellulosic fiber and animal hairs such as wool, cashmere, angora and the like, silk and the like. Examples of the cellulosic fiber include natural cellulose fibers such as cotton, hemp, kenaf, pulp and the like, regenerated cellulose fibers such as viscose rayon, cupra, acetate etc., and the like. In addition, examples of the synthetic fiber include acrylic fibers such as acryl, moda acryl and the like, polyester fiber, nylon fibers such as nylon 6, nylon 66 and the like, polyolefin fibers such as polyethylene, polypropylene and the like, polyamide fiber, polyimide fiber, polyvinyl chloride fiber, vinylon fiber, polyurethane fiber and the like.
In the case of a fiber substrate having a surface positively charged in water, whose main constituent fiber is made of a fiber positively charged in water (e.g., nylon fiber, polyamide fiber, polyimide fiber, polyurethane fiber, wool, silk, animal hair etc.), a zirconium phosphate layer 2 electrostatically bound to a substrate 1 can be formed by directly applying a zirconium phosphate single layer exfoliation dispersion liquid to the substrate and drying same.
In the case of a fiber substrate having a surface negatively charged in water, whose main constituent fiber is made of a fiber negatively charged in water (e.g., cotton, cellulose, polyester, polyvinyl alcohol, polyether etc.), a zirconium phosphate layer 2 is electrostatically fixed on a substrate 1 via aluminum ion or polyaluminum ion 4 by, as mentioned above, adsorbing aluminum ion or polyaluminum ion onto the surface of the fiber substrate, applying a zirconium phosphate single layer exfoliation dispersion liquid to the substrate and drying same.
In the case of a fiber substrate whose main constituent fiber is made of a protein fiber such as animal hairs (wool, cashmere, angora etc.) and the like, a zirconium phosphate layer 2 is electrostatically fixed on a substrate 1 via aluminum ion or polyaluminum ion 4 by, as mentioned below, adsorbing polyphenols such as gallic acid and the like, further adsorbing aluminum ion or polyaluminum ion, applying a zirconium phosphate single layer exfoliation dispersion liquid to the substrate and drying same.
Regardless of the charging polarity of the fiber substrate in water, therefore, the fiber products in the embodiments of Figs. 2 and 3 can be obtained. The "main constituent fiber of the fiber substrate" mentioned above refers to a constituent fiber accounting for 50 - 100 mass% of the whole fiber substrate.
In the present invention, to more enhance the binding force of the zirconium phosphate layer to the fiber substrate, a fiber substrate with a surface treated in advance for introduction of an anion group or cationic group is preferably used. This is because, it is considered, the presence of an anion group on the fiber surface of fiber substrate 1 also leads to the formation of the aforementioned complex with an aluminum ion or a polyaluminum ion, which affords a stronger electrostatic binding force. In addition, when a cationic group is present on the fiber surface of fiber substrate 1 and, for example, an aqueous solution of a water-soluble aluminum compound such as aqueous alum solution and the like is applied to the fiber substrate; it is considered, an anion (e.g., sulfate ion) derived from the water-soluble aluminum compound in the aqueous solution is adsorbed to the fiber surface, the anion is substituted by a hydroxyl group in a subsequent water-washing process, and a zirconium phosphate layer is strongly adsorbed to the fiber surface after the substitution.
Examples of the anion group include a hydroxyl group, a carboxyl group, a phosphate group and the like. As an introduction method, any method known in the field of fiber processing can be used as long as it does not impair the texture of the fiber substrate. For natural fibers such as cellulosic fiber, protein fiber and the like, for example, a method of producing oxidized cellulose by using nitrogen peroxide and nitrogen dioxide, a method of producing oxidized cellulose by UV irradiation, a method of esterifying carboxylic acid with a catalyst, and the like can be mentioned.
Particularly when a carboxyl group, a phosphate group and the like are introduced, a graft polymerization method, by electron beam irradiation, of a vinyl monomer containing a carboxyl group, a phosphate group and the like is preferable, since a carboxyl group, a phosphate group and the like can be certainly introduced into various kinds of fibers. According to this method, a vinyl monomer can be graft polymerized according to a preirradiation method including irradiating electron beam on the fiber substrate and contacting the fiber substrate with a vinyl monomer solution, or a coincidence irradiation method including irradiating an electron beam in the co-presence of a fiber substrate and a vinyl monomer, and the like. Examples of the carboxyl group-containing vinyl monomer include acrylic acid, methacrylic acid, maleic acid, fumaric acid, itaconic acid, citraconic acid, maleic acid anhydride, itaconic anhydride, methacrylic anhydride and the like. One kind of these may be used alone or two or more kinds thereof may be used in a mixture. In addition, examples of the carboxyl group-containing vinyl monomer containing a phosphate group include mono(2-methacryloyloxyethyl) acid phosphate, di (2-methacryloyloxyethyl) phosphate, mono(2-acryloyloxyethyl) acid phosphate, di(2-acryloyloxyethyl) acid phosphate and the like. One kind of these may be used alone or two or more kinds thereof may be used in a mixture.

For graft polymerization of a vinyl monomer, the vinyl monomer is preferably used in the form of a solution. The solvent to be used for preparing a solution (vinyl monomer solution) in this case is not particularly limited. For example, organic solvents such as alcohols, ethylene dichloride and the like can be mentioned besides water. The concentration of the vinyl monomer solution is preferably 5 - 50 wt%, more preferably 5 - 20 wt%. While the dose of the electron beam to be irradiated on the fiber substrate is not particularly limited, it is preferably about 10 - 100 kGy. When the dose of the electron beam is less than 10 kGy, graft polymerization may not be performed sufficiently, and when the dose of the electron beam exceeds 100 kGy, the fiber may be deteriorated. Also, the accelerating voltage is not particularly limited, and can be appropriately determined according to the thickness of the fiber substrate to be treated and the like. It is generally about 100 - 300 kV. In addition, the electron beam irradiation atmosphere preferably contains oxygen at a low concentration, and it is particularly preferably performed under a nitrogen atmosphere.

The graft rate of the monomer in the graft polymerization is preferably about 1 - 20 wt%, more preferably about 5 - 10 wt%. When the graft rate is less than 1 wt%, the amount of aluminum ion or polyaluminum ion, or zirconium phosphate to be attached tends to decrease, and when it exceeds 20 wt%, the original texture of the fiber substrate tends to decrease. The "graft rate" in the present specification refers to a weight fraction of the grafted monomer relative to the fiber substrate before the graft polymerization reaction, and is calculated according to the following formula.

Graft rate (wt%)=[(dry weight of fiber substrate after graft polymerization - dry weight of fiber substrate before graft polymerization)/dry weight of fiber substrate before graft polymerization]$\times$100

When a hydroxyl group is introduced into the surface of a protein fiber of animal hairs such as wool, cashmere, angora and the like, a method including reacting polyphenols having not less than 3 hydroxyl groups in one molecule such as tannin, tannic acid, gallotannin, gallnut and gallic acid and the like is preferable. This method can be performed by, for example, immersing a fiber substrate in 1 - 100 mM aqueous solution of polyphenols (temperature: about 10 - 100°C) for about 0.25 - 2 hr. The reaction amount of polyphenols is preferably about 1 - 50 wt% relative to the fiber substrate. When the amount is less than 0.1 wt%, the effect of introducing a hydroxyl group may not be sufficient achieved, and when it exceeds 50 wt%, adsorption becomes nonuniform and removal of redundant ion during washing becomes difficult. As a result, the strength of a laminate film tends to decrease.

Examples of the cationic group include a quaternary ammonium salt group, an amino group, a quaternary phosphonium group and the like. As an introduction method thereof, a method including graft polymerization by the aforementioned electron beam irradiation and using a vinyl monomer containing such cationic group is preferable. The cationic group is preferably a quaternary ammonium salt group and, as the vinyl monomer containing the quaternary ammonium salt group, a quaternary ammonium salt of dialkylaminoalkyl(meth)acrylate is preferable. Here, the alkyl group means one having not more than 3 carbon atoms. A typical example of dialkylaminoalkyl(meth)acrylate is dimethylaminoethyl(meth)acrylate. The reaction conditions, graft rate and the like of the graft polymerization reaction are those mentioned above.

[Photocatalyst]

The photocatalyst to be used in the present invention is a metal oxide which is excited by light irradiation (particularly UV irradiation) to show an oxidative reduction ability, and can decompose an organic substance. Specific examples include titanium oxide (titanium dioxide), titanic acid, titanate, niobic acid, niobic acids, titanoniobic acid, zinc oxide, copper oxide and the like, transition metal oxide and the like. Of these, preferred is titanium oxide, and titanium dioxide or one in a lower-order oxidized state is preferable, since high photocatalyst activity is achieved. In addition, titanium oxide of various crystal types such as anatase type, rutile type, brookite type and the like can be used. Of these, anatase type is preferable. In the present invention, moreover, the photocatalyst (metal oxide) preferably has an average primary particle size of less than 1$\mu$ m (that is, nano level), particularly preferably one having high crystallinity and an average primary particle size of not more than 50 nm is preferable, since it shows high photocatalyst activity. While the lower limit of the average primary particle size of the photocatalyst (metal oxide) is not particularly limited, it is preferably not less than 20 nm, since too small a size thereof results in a widened bandgap due to a quantum size effect, which prevents effective use of near-ultraviolet light. As a result, the reaction efficiency may decrease. The "average primary particle size" here is an average of particle sizes determined from the images under electron micrograph observation by FE-SEM (field emission scanning electron microscope: manufactured by Hitachi, Ltd., S-4500 type). A photocatalyst (metal oxide) having an average primary particle size of less than 1 μm tends to agglomerate, and is generally fixed (adsorbed) in a secondary particle state on a zirconium phosphate layer.

In the fiber product of the present invention, the photocatalyst 3 is electrostatically fixed on the zirconium phosphate layer 2 (zirconium phosphate layer 2b, which is the outermost layer of the zirconium phosphate multilayer 10). That is, many of the metal oxides such as titanium oxide and the like to be used as the photocatalyst 3 are positively charged in an acidic solution and negatively charged in an alkali solution, due to the dissociation equilibrium of a hydrophilic functional group such as a hydroxyl group and the like on the surface. In the present invention, such charging tendency of metal oxide in water is utilized and, as mentioned below, a photocatalyst (metal oxide) 3 charged positively in water is electrostatically adsorbed on a zirconium phosphate layer 2(2b) to be charged negatively, whereby the photocatalyst 3 is fixed on the outermost part of the fiber substrate. In this case, the phosphate group shown in the partial structure of zirconium phosphate undergoes proton dissociation and is permanently charged negatively by a zirconium phosphate layer, simultaneously with which specifically forms a covalent bond with metal oxide such as titanium oxide and the like. The density of the phosphate structure of zirconium phosphate is 4.1/square nm, and the structure is present at extremely high density. Thus, even a metal oxide in a nano particle state can be tightly fixed by multipoint electrostatic binding and specific covalent bond.

As mentioned above, a photocatalyst having an average primary particles size of less than 1 μm tends to agglomerate, and is generally fixed (adsorbed) in a secondary particle state. Since the photocatalyst particles are generally adsorbed as a single particle layer, the thickness of the photocatalyst layer is as thin as 1 μm or below. However, since the photocatalyst tends to tightly agglomerate transversely on the surface of a product, an agglomerate structure of several microns is observed when the surface is observed by SEM. The secondary particles size is preferably 50 - 5000 nm, more preferably 1000 - 3000 nm (1 - 3 μm) from the aspects of carrying stability on zirconium phosphate layer 2(2b), maintenance of fiber texture and the like. The secondary particles of a photocatalyst are formed in an aqueous dispersion liquid of the photocatalyst for carrying the photocatalyst on zirconium phosphate layer 2(2b) and have an average particle size of 2 - 20 μm. However, since particles having a size of not less than 5 μm are easily removed by washing with water after carrying, secondary particles having a thickness of about 1 μm, and a transverse agglomerate size of about 1 - 3 μm are formed on the surface of zirconium phosphate layer 2(2b). The particle size of the photocatalyst dispersed in water is measured by a light scattering method in an aqueous dispersion liquid of the photocatalyst. A particle size variation between the secondary particles in an aqueous dispersion liquid of the photocatalyst and the secondary particles carried on a zirconium phosphate layer is small, and the secondary particles size of the photocatalyst in an aqueous dispersion liquid is directly reflected on the particle size of the photocatalyst carried on a zirconium phosphate layer.

In the fiber product of the present invention, the amount of the photocatalyst 20 to be carried is not particularly limited, and a single particle adsorbed film or secondary particle adsorbed film of the photocatalyst only needs to be formed on the surface of zirconium phosphate layer 2(2b). In the present invention, a secondary particle adsorbed film of the photocatalyst can be formed easily, since the photocatalyst is associated to form secondary particles in a photocatalyst dispersion liquid used for the production and the particles are electrostatically adsorbed to zirconium phosphate layer 2(2b). Here, the "single particle adsorbed film" refers to the state where photocatalyst primary particles are adsorbed (attached) to the surface of the zirconium phosphate layer 2(2b) at an about uniform density, and the "secondary particles adsorbed film" refers to the state where a photocatalyst is adsorbed as secondary particles or primary particles maintaining a single particle layer are agglomerated on the surface. The surface of the zirconium phosphate layer 2(2b) is not necessarily covered completely with the photocatalyst particles, and generally, not less than 30% of the surface of the zirconium phosphate layer 2(2b) only needs to be covered with the photocatalyst particles. That is, the coverage of the photocatalyst on the surface of zirconium phosphate layer 2(2b) is preferable not less than 30%, more preferably not less than 60%, particularly preferably not less than 80%. When the photocatalyst is adsorbed and carried in excess on the surface of zirconium phosphate layer 2(2b), the photocatalyst is unstably fixed on a zirconium phosphate layer, and unpreferably tends to be exfoliated particularly in water. The above-mentioned coverage can be calculated from images of a scanning electron microscope photograph by FE-SEM and the like.

[Production method of fiber product carrying photocatalyst]

(1) Preparation of fiber substrate-zirconium phosphate layer composite

(a) When a fiber product in the embodiment shown in Figs. 1, 2 is to be produced, a composite of a fiber substrate and a zirconium phosphate layer integrated directly or via an aluminum ion or a polyaluminum ion is produced by, with or without immersing the fiber substrate in an aqueous solution of a water-soluble aluminum compound and washing the substrate with water, immersing the fiber substrate in a zirconium phosphate single layer exfoliation dispersion liquid, washing the substrate with water, and drying the substrate.

(b) When a fiber product in the embodiment shown in Fig. 3 is to be produced, a composite wherein a zirconium phosphate multilayer comprising two or more zirconium phosphate layers laminated via an aluminum ion or a polyaluminum ion is integrated with a fiber substrate via an aluminum ion or a polyaluminum ion is produced by alternately repeating a first work comprising immersing the fiber substrate in an aqueous solution of a water-soluble aluminum compound and washing the substrate with water, and a second work comprising immersing the fiber substrate in a zirconium phosphate single layer exfoliation dispersion liquid and washing the substrate with water, such that the second work is performed at least two times, and drying the fiber substrate obtained from the second work as the last work.

An aqueous solution of a water-soluble aluminum compound generally has a concentration of about 0.1 - about 200 mM. When the concentration is greater than 200 mM, uniform adsorption becomes difficult, and when it is less than 0.1 mM, both the amount adsorbed and the adsorption rate decrease, thus rendering the coating insufficient. The concentration of the zirconium phosphate single layer exfoliation dispersion liquid to be used for forming a zirconium phosphate layer (zirconium phosphate content) is generally about 1 mg - about 1 g/L, preferably about 0.1 g - about 1 g/L. When the concentration of the zirconium phosphate single layer exfoliation dispersion liquid is higher than 1 g/L, the liquid tends to be gelled due to thixotropy, and when it is less than 1 mg/L, the coating tends to be insufficient.

The drying to be performed after immersion of a fiber substrate in a zirconium phosphate single layer exfoliation dispersion liquid is a treatment to leave the fiber substrate in the environment of temperature about 5 - about 30°C and humidity 20 - 80% for about 12 - about 24 hr, which is preferably performed in an environment blocking the sunlight (drying in shade). The time therefor can be shortened by a dehydrating operation by centrifugation dehydration and the like.

(2) Supporting of photocatalyst

First, using a planetary stirring machine and the like, for example, a pulverization ball such as zirconia ball and the like, a photocatalyst such as titanium oxide and the like, and distilled water are placed in a ball mill using a zirconia ball and the like as a pulverization ball, and the mixture is stirred at 300 - 1000 rpm for a given time (generally about 15 - 120 min), distilled water is further added and the mixture is stirred. This operation is repeated to give a paste having a photocatalyst content of 100 g/L. Then, hydrochloric acid and the like are added to distilled water to adjust to a pH of about 3 - of about 5.5. To the resulting acidic water is added an appropriate amount of the above-mentioned photocatalyst paste, which is dispersed therein to give an aqueous dispersion liquid comprising the photocatalyst positively charged and dispersed therein. The content of the photocatalyst in the dispersion liquid is preferably about 0.05 - about 5 g/L. When the concentration (content) of the photocatalyst is higher than 5 g/L, exfoliation easily occurs and the yield tends to decrease. When it is less than 0.05 g/L, sufficient carrying tends to be unavailable. Then, the fiber substrate-zirconium phosphate layer composite prepared in the aforementioned (1) is immersed in an aqueous dispersion liquid of the photocatalyst, washed with water, and naturally dried. After drying, it is sintered at 60 - 150°C for about 1 - about 3 hr. The natural drying here is a treatment to leave the composite in the environment of temperature about 15 - about 30°C and humidity 20 - 80% for about 12 - about 24 hr, which is preferably performed in an environment blocking the sunlight (drying in shade). The time therefor can be shortened by a dehydrating operation by centrifugation dehydration and the like. As a result, an object fiber product carrying a photocatalyst is obtained, wherein the 'photocatalyst is electrostatically adsorbed and immobilized on the zirconium phosphate layer, which is the outermost layer, by sintering.

The fiber product of the present invention, which carries a photocatalyst, can be preferably applied to fiber products for various uses such as interior equipment including clothing, bedclothes, tablecloth, wallpaper, curtain, carpet, seat, chair and the like, and the like. Since the fiber product can solve the problem of impaired fiber texture, which has been difficult to improve for conventional fiber products carrying a photocatalyst, it can be particularly preferably used as a cloth for various clothes including both underwear and outerwear. Since the photocatalyst fiber in the present invention shows a photocatalyst activity by being irradiated with imperceptible ultraviolet rays such as sunlight and room light, when worn as clothes or used as wallpaper, sheet, cover and the like, only the surface layer exposed to light irradiation is activated, and the backside free of light irradiation does not show activity.

Titanium oxide has long been used as a white pigment, and the reserves are sufficient. Zirconium phosphate is comparatively safe and associated with less health problems. Alum is also approved as a food additive for pickles and the like, and the risk to human body is extremely small. Examples

The present invention is explained in more detail in the following by referring to Examples and Comparative Examples, which are not to be construed as limitative.

[1] Materials used

1. Fiber substrate

Total 5 kinds of the following cloths of cotton 100% plain weave mercerized cloth (untreated material) and treated materials after various processing treatments were prepared.

    cloth 1: dimethylaminoethylacrylate quaternary ammonium salt-treated material
    cloth 2: monomethacryloyloxyethylphosphate-treated material
    cloth 3: acrylic acid-treated material
    cloth 4: gallic acid-treated material
    cloth 5: untreated material

*1) dimethylaminoethylacrylate quaternary ammonium salt treatment: Electron beam (20 kGy) was irradiated on one surface of cotton 100% plain weave silkete-like cloth under a nitrogen atmosphere by an electro curtain type electron beam irradiation apparatus EC250/15/180L (manufactured by EYE ELECTRON BEAM CO., LTD.). The cloth after the electron beam irradiation was immersed in 10% aqueous dimethylaminoethylacrylate quaternary ammonium salt solution, squeezed with a mangle to about 70 wt% impregnation rate relative to the cloth, and aged at 35°C for 18 hr. Electron beam (20 kGy) was irradiated again on the other unirradiated surface by electro curtain type electron beam irradiation apparatus EC250/15/180L (EYE ELECTRON BEAM CO., LTD) under a nitrogen atmosphere. After irradiation, the cloth was aged at 35°C for 18 hr. Then, the cloth was washed with water to remove unreacted agent and dried. The graft rate was 2.0%.
*2) monomethacryloyloxyethylphosphate treatment: A similar treatment was performed except that monomethacryloyloxyethylphosphate was used as the agent in *1). The graft rate was 4.2%.
*3) acrylic acid treatment: A similar treatment was performed except that acrylic acid was used as the agent in *1). The graft rate was 7.4%.
*4) gallic acid treatment: After immersion in 10 mM aqueous gallic acid solution for 2 hr, the cloth was dried with hot air at 100°C. [0054]

    2. Ethanol
    3. Aqueous potassium alum solution (concentration: 30 mM)
    4. Zirconium phosphate single layer exfoliation dispersion liquid (concentration: 1 mM)
    *Zirconium phosphate ($\alpha$-Zr(HPO$_4$)$_2$·2H$_2$O) (0.15 g) was dispersed in 20 mL of water by shaking, and ion exchange by 10% aqueous tetrabutylammonium solution (alkali agent) was performed. After centrifugation, the supernatant was diluted 40-fold with water and used.
    5. Titanium oxide (trade name UFA manufactured by Showa Titanium Co., Ltd.): ring ultrafine particles anatase type titanium oxide

[2] Photocatalyst processing

    A. Preparation of fiber substrate - zirconium phosphate multilayer composite

        (1) A cloth is immersed in ethanol and washed for 24 hr.
        (2) The cloth is washed with distilled water, and ethanol content is removed.
        (3) The cloth is immersed in aqueous potassium alum solution for 15 min.
        (4) The cloth is washed twice with distilled water and dried in the air in a dark place.
        (5) The cloth is immersed in zirconium phosphate single layer exfoliation dispersion liquid for 15 min.
        (6) The cloth is washed twice with distilled water.
        (7) (3) to (6) are repeated 4 more times to form a 5-layer zirconium phosphate layer.
        (8) The fiber substrate having a zirconium phosphate multilayer with the 5-layer zirconium phosphate layer after operation of (7) is dried in shade.

    B. Preparation of fiber substrate-zirconium phosphate multilayer-titanium oxide (layer) composite

        (1) Preparation of titanium oxide paste
        A planetary stirring machine is used.

A zirconia ball (diameter 2 mm, 9 g), titanium oxide (2 g) and distilled water (4 mL) are placed in a zirconia ball mill. The weight of the other ball mill is adjusted with a zirconia ball and water to the same weight. The mixture is stirred at 450 rpm for 15 min. After completion of stirring, distilled water (4 mL) is added and the mixture is stirred again under the same conditions. Distilled water is added and stirring is repeated. When the distilled water reaches 20 mL, a 100 g/L paste is completed.

(2) Preparation of aqueous titanium oxide dispersion liquid

Distilled water (300 mL) is adjusted with hydrochloric acid to pH 4.5, 3 mL of the titanium oxide paste of (1) is dispersed in the solution to give 1 g/L titanium oxide dispersion solution.

(3) The fiber substrate-zirconium phosphate multilayer composite prepared in the aforementioned A. is immersed in the titanium oxide dispersion solution of (2) for 15 min, and washed once with distilled water.

(4) The composite after operation in (3) is dried in shade. When dried, it is sintered at 120°C for 2 hr.

Example 1

The above-mentioned photocatalyst processing was applied to cloth 1 (dimethylaminoethylacrylate quaternary ammonium salt-treated material).

Example 2

The above-mentioned photocatalyst processing was applied to cloth 2 (monomethacryloyloxyethylphosphate-treated material).

Example 3

The above-mentioned photocatalyst processing was applied to cloth 3 (acrylic acid-treated material).

Example 4

The above-mentioned photocatalyst processing was applied to cloth 4 (gallic acid-treated material).

Comparative Example 1

Cloth 5 (untreated material) was directly used.

In Examples 1 - 4, the aluminum ion or polyaluminum ion adsorbed on the cloths was about 62 $\mu$g/m$^2$ each. In all of Examples 1 - 4, the total thickness of the zirconium phosphate multilayer was about 5 nm, the thickness of the zirconium phosphate layer (single layer) was about 0.7 nm. The thickness of the aluminum ion layer (single layer) was about 0.3 nm. Here, the total thickness of the zirconium phosphate multilayer was determined from sectional image pictures of the composite obtained by FE-SEM (field-emission-type scanning electron microscope): manufactured by Hitachi, Ltd. S-4500 type.

In all of Examples 1 - 4, the particle size range of the titanium oxide primary particles fixed (adsorbed) on the zirconium phosphate layer (the outermost layer) was 5 - 10 nm (average particle size: 8 nm), and the particle size range of the secondary particles obtained by agglomeration of the primary particles was 50 - 300 nm (average particle size: 100 nm).

The particle size of the titanium oxide primary particles was calculated from the image pictures of the fiber surface obtained by FE-SEM (field-emission-type scanning electron microscope): manufactured by Hitachi, Ltd. S-4500 type, and the average particle size is an average of multiple particle sizes. Concretely, the magnification was first set such that not less than 500 particles were contained in the field and electron micrograph was taken. Then, the area of each particle image in the micrograph was calculated, and the diameter of a circle having the same area as the calculated area (i.e., Heywood diameter) was calculated and taken as the particle size of individual particle. The number average of the measured particles was calculated and taken as an average particle size.

Also, the secondary particles size (average particle size) was measured by a light scattering particle size distribution analyzer (SHIMADZU Corporation: SALD-200V) for the particles in a sample liquid (pH:5) obtained by diluting aqueous titanium oxide dispersion liquid with water. The average particle size is an arithmetical mean diameter.

(1) Deodorization test 1

The following tests A and B were performed for Examples 1 - 3 and Comparative Example 1. The exposure factor of black light was exposure intensity 1.0 mW. The tests were performed for the cloth before washing and the cloth after 10 times of washing test in accordance with the test method described in JIS L0217:1995, appendix Table 1 (No. 103).

Test A (aldehyde)

A sample (1g) was placed in a 1L Tedlar bag, acetaldehyde was added at a given concentration (18.0 ppm), and the black light was irradiated. The residual gas concentration after 2 hr and 24 hr was measured with a detector tube. The deodorization rate was calculated based on the following formula and using the concentration measured without a sample (blank test concentration) as a standard.

```
Deodorization rate (%)=((blank test concentration-sample test
concentration)/(blank test concentration))×100
```

Test B (hydrogen sulfide)

A sample (1 g) was placed in a 1L Tedlar bag, hydrogen sulfide was added at a given concentration (20.0 ppm), and the black light was irradiated. The residual gas concentration after 2 hr and 24 hr was measured with a detector tube. The deodorization rate was calculated in the same manner as in Test A using the blank test concentration as a standard.

(2) Deodorization test 2

The following tests A and B were performed for Example 4 and Comparative Example 1. The tests were performed for the cloth before washing and the cloth after 10 times of washing test in accordance with the test method described in JIS L0217:1995, appendix Table 1 (No. 103).

Test A (aldehyde)

The test was performed in the same manner as in deodorization test 1, test A except that the given concentration of acetaldehyde was changed to 16.0 ppm.

Test B (hydrogen sulfide)

The test was performed in the same manner as in deodorization test 1, test B except that the given concentration of hydrogen sulfide was changed to 32.0 ppm.
The results of deodorization tests 1 and 2 are shown in Table 1 and Table 2.
Table 1

| deodorization test 1 | | graft rate [wt%] | washing | exposure factor | test A (acetaldehyde) | | | | | test B (hydrogen sulfide) | | | | |
|---|---|---|---|---|---|---|---|---|---|---|---|---|---|---|
| | | | | | 0 min | 2 hr later | | 24 hr later | | 0 min | 2 hr later | | 24 hr later | |
| | | | | | concen-tration | concen-tration | deodoriza-tion rate | concen-tration | deodoriza-tion rate | concen-tration | concen-tration | deodoriza-tion rate | concen-tration | deodoriza-tion rate |
| | | | | | [ppm] | [ppm] | [%] | [ppm] | [%] | [ppm] | [ppm] | [%] | [ppm] | [%] |
| blank test | | | | | 18.0 | 15.0 | - | 14.0 | - | 20.0 | 20.0 | - | 19.0 | - |
| Example 1 | dimethylamino-ethylacrylate quaternary ammonium salt | 2.0 | none | black light | - | 0 | 100 | 0 | 100 | - | 0 | 100 | 0 | 100 |
| | | | washed | | - | 16.0 | 1.1 | 0 | 100 | - | 10.0 | 50.0 | 0 | 100 |
| Example 2 | monomethacryloyl-oxyethylphosphate | 4.2 | none | | - | 0 | 100 | 0 | 100 | - | 16.0 | 20.0 | 0 | 100 |
| | | | washed | | | 14.0 | 2.2 | 0 | 100 | - | 15.0 | 25.0 | 0 | 68.4 |
| Example 3 | acrylic acid | 7.4 | none | | - | 0 | 100 | 0 | 100 | - | 9.0 | 55.0 | 0 | 100 |
| | | | washed | | - | 16.0 | 1.1 | 0 | 100 | - | 16.0 | 20.0 | 0 | 68.4 |
| Comparative Example 1 | no processing | - | none | | - | 14.0 | 2.2 | 13.0 | 27.8 | - | 20.0 | 0 | 17.0 | 10.5 |
| | | | washed | | - | 14.0 | 2.2 | 8.0 | 55.6 | - | 19.0 | 5.0 | 18.0 | 5.3 |

EP 2 397 604 A1

Table 2

| deodorization test 2 | | treated amount [wt%] | washing | exposure factor | test A (acetaldehyde) | | | | | test B (hydrogen sulfide) | | | | |
|---|---|---|---|---|---|---|---|---|---|---|---|---|---|---|
| | | | | | 0 min | 2 hr later | | 24 hr later | | 0 min | 2 hr later | | 24 hr later | |
| | | | | | concen-tration | concen-tration | deodoriza-tion rate | concen-tration | deodoriza-tion rate | concen-tration | concen-tration | deodoriza-tion rate | concen-tration | deodoriza-tion rate |
| | | | | | [ppm] | [ppm] | [%] | [ppm] | [%] | [ppm] | [ppm] | [%] | [ppm] | [%] |
| blank test | | | | black light | 16.0 | 16.0 | - | 15.0 | - | 32.0 | 32.0 | - | 26.0 | - |
| Example 4 | gallic acid | - | none | | - | 4.0 | 75.0 | 0 | 100 | - | 30.0 | 6.3 | 19.0 | 26.9 |
| | | | washed | | - | 12.0 | 25.0 | 0 | 100 | - | 30.0 | 6.3 | 14.0 | 46.2 |
| Comparative Example 1 | no processing | - | none | | - | 16.0 | 0 | 16.0 | 0 | - | 28.0 | 13.0 | 32.0 | 0 |

(3) Elemental analysis

A semi-quantitative elemental analysis by X-ray fluorescence analysis was performed for each cloth of Examples 1 - 4 and Comparative Example 1 before and after washing.

wavelength dispersion type X-ray fluorescence analysis apparatus: ZSX 100e (manufactured by Rigaku Corporation)
measurement condition: samples were punched out in 30 mmφ, and the analysis was performed for the measurement ranges B - U in a vacuum atmosphere by the EZ scan method.

The results are shown in Table 3. The unit of the numerical values in the Table is mass %.
Table 3

| detection element | Comparative Example 1 | | Example 1 | | Example 2 | | Example 3 | | Example 4 | |
|---|---|---|---|---|---|---|---|---|---|---|
| | initial (%) | after washing (%) | initial (%) | after washing (%) | initial (%) | after washing (%) | initial (%) | after washing (%) | initial (%) | after washing (%) |
| C | 50.1594 | 50.4118 | 44.5063 | 50.4798 | 49.5727 | 49.1791 | 47.2395 | 49.3434 | 50.1880 | 50.3970 |
| N | - | - | 5.5531 | - | - | - | 2.3865 | - | - | - |
| O | 49.7856 | 49.5168 | 49.0388 | 49.1547 | 49.5686 | 49.6723 | 49.4734 | 48.9663 | 49.685 | 49.4850 |
| Na | 0.02 | 0.0153 | 0.0052 | 0.0145 | 0.0215 | 0.0276 | 0.0086 | 0.0207 | 0.0069 | 0.0137 |
| Mg | 0.0031 | 0.0034 | - | 0.0039 | 0.0024 | 0.0889 | 0.0014 | 0.2034 | 0.0025 | 0.0035 |
| Al | 0.0047 | 0.0077 | 0.0079 | 0.0101 | 0.1955 | 0.0712 | 0.2831 | 0.1167 | 0.0070 | 0.0066 |
| Si | 0.0099 | 0.0104 0.0069 | | 0.0129 | 0.0128 | 0.0223 | 0.0069 | 0.0111 | 0.0099 | 0.0097 |
| P | 0.0012 | 0.0009 | 0.0186 | 0.0049 | 0.3656 | 0.3911 | 0.0224 | 0.0094 | 0.0070 | 0.0036 |
| S | 0.0042 | 0.0102 | 0.1195 | 0.1312 | 0.0046 | 0.0055 | 0.0076 | 0.0045 | 0.0022 | 0.0089 |
| Cl | 0.0039 | 0.0055 | 0.0072 | 0.0108 | 0.0065 | 0.0062 | 0.0056 | 0.0052 | 0.0033 | 0.0056 |
| K | 0.0019 | 0.0025 | - | 0.0021 | 0.0031 | 0.0036 | 0.0012 | 0.0043 | 0.0021 | 0.0023 |
| Ca | 0.0055 | 0.015 | - | 0.0236 | 0.0018 | 0.3963 | 0.001 | 1.1487 | 0.0017 | 0.0156 |
| Ti | - | - | 0.7349 | 0.1506 | 0.2435 | 0.1348 | 0.5615 | 0.1647 | 0.0838 | 0.0481 |
| Fe | 0.0007 | 0.0005 | 0.0009 | 0.0007 | 0.0011 | 0.0007 | 0.0008 | 0.0010 | 0.0007 | 0.0006 |
| Zn | - | - | - | - | - | - | - | 0.0002 | - | - |
| Sr | - | - | - | - | - | 0.0001 | - | 0.0002 | - | - |
| Zr | - | - | 0.0007 | 0.0001 | 0.0005 | 0.0002 | 0.0006 | 0.0003 | 0.0002 | 0.0002 |

As is clear from Tables 1 and 2, the cloths after photocatalyst processing in Examples 1 - 4 showed a clear deodorization effect under light irradiation. In addition, the deodorization effect was found to be durable and maintained even after washing. Moreover, the results of X-ray fluorescence analysis (Table 3) have confirmed that sufficient amounts of photocatalysts were carried even after washing.

(4) Texture of cloth

The texture of Examples 1 - 4 (photocatalyst processed products) showed almost no difference from that of Comparative Example 1 (unprocessed product) by a sensual touching test. In addition, they showed almost no difference in the results of visual observation, color sense test and the like from Comparative Example 1 (unprocessed product), and it was confirmed that a photocatalyst processing scarcely affects the texture of fiber substrates.

Industrial Applicability

In the fiber product of the present invention which carries a photocatalyst, a protection film and a photocatalyst film are laminated without impairing the texture of the fiber substrate. Therefore, the fiber product can be widely applied to not only house interior decoration such as curtain, wallpaper and the like, but also daily necessities such as clothes, umbrella, bag, carpet and the like. Due to the strong protective effect by zirconium phosphate, it can be used as an ultraviolet ray cutting off fiber, and is also expected to be a protection film for aramid, polyamide and nylon fiber, which are susceptible to ultraviolet ray damage.

[explanation of symbols]

1 f iber substrate
2 zirconium phosphate layer
3 photocatalyst
4 aluminum ion or polyaluminum ion
10 zirconium phosphate multilayer

This application is based on a patent application No. 2009-31931 filed in Japan, the contents of which are incorporated in full herein.

**Claims**

1. A fiber product carrying a photocatalyst, which comprises a fiber substrate, a zirconium phosphate layer electrostatically fixed thereon, and a photocatalyst electrostatically fixed on a surface of the zirconium phosphate layer.

2. The fiber product according to claim 1, comprising an aluminum ion or a polyaluminum ion between the zirconium phosphate layer and the fiber substrate.

3. A fiber product carrying a photocatalyst, which comprises a fiber substrate, a zirconium phosphate multilayer electrostatically fixed thereon, the multilayer comprising at least one lamination part comprising two zirconium phosphate layers laminated via an aluminum ion or a polyaluminum ion, and a photocatalyst electrostatically fixed on a zirconium phosphate layer, which is the outermost layer of the zirconium phosphate multilayer.

4. The fiber product according to claim 3, comprising an aluminum ion or a polyaluminum ion between the zirconium phosphate multilayer and the fiber substrate.

5. The fiber product according to any of claims 1 to 4, wherein the photocatalyst is titanium oxide.

6. The fiber product according to any of claims 1 to 5, wherein the fiber substrate has a fiber surface that underwent an anionic group introduction treatment.

7. The fiber product according to claim 6, wherein the anionic group is a phosphate group, a carboxyl group or a hydroxyl group.

8. The fiber product according to any of claims 1 to 5, wherein the fiber substrate has a fiber surface that underwent a cationic group introduction treatment.

9. The fiber product according to claim 8, wherein the cationic group is a quaternary ammonium salt group.

10. A method of producing a fiber product carrying a photocatalyst, comprising at least a first step for producing a composite of a fiber substrate and a zirconium phosphate layer integrated directly or via an aluminum ion or a polyaluminum ion, comprising, with or without immersing the fiber substrate in an aqueous solution of a water-soluble aluminum compound and washing the substrate with water, immersing the fiber substrate in a zirconium phosphate single layer exfoliation dispersion liquid, washing the substrate with water, and drying the substrate, and a second step of immersing the aforementioned composite in an aqueous photocatalyst dispersion liquid wherein the photocatalyst is positively charged and dispersed, washing the composite with water, and drying and sintering the composite.

11. A method of producing a fiber product carrying a photocatalyst, comprising at least a first step for producing a composite wherein a zirconium phosphate multilayer comprising at least one lamination part comprising two zirconium phosphate layers laminated via an aluminum ion or a polyaluminum ion is integrated with a fiber substrate via an aluminum ion or a polyaluminum ion, comprising alternately repeating a first work comprising immersing the fiber substrate in an aqueous solution of a water-soluble aluminum compound and washing the substrate with water, and a second work comprising immersing the fiber substrate in a zirconium phosphate single layer exfoliation dispersion liquid and washing the substrate with water, such that the second work is performed at least two times, and drying the fiber substrate obtained from the second work as the last work, and a second step of immersing the aforementioned composite in an aqueous photocatalyst dispersion liquid wherein the photocatalyst is positively charged and dispersed, washing the composite with water, and drying and sintering the composite.

12. The production method according to claim 10 or 11, wherein the fiber substrate has a fiber surface that underwent an anionic group introduction treatment.

13. The production method according to claim 12, wherein the anionic group is a phosphate group, a carboxyl group or a hydroxyl group.

14. The production method according to claim 10 or 11, wherein the fiber substrate has a fiber surface that underwent a cationic group introduction treatment.

15. The production method according to claim 14, wherein the cationic group is a quaternary ammonium salt group.

16. The production method according to any of claims 10 to 15, wherein the water-soluble aluminum compound is alum.

## FIG. 1

```
                                           3
                                           2
                                           1
```

## FIG. 2

```
                                           3
                                           2
                                           4
                                           1
```

## FIG. 3

```
                                           3
                                           2 (2 b)
                                           4
        10                                 2
                                           4
                                           2 (2 a)
                                           4
                                           1
```

<table>
<tr><td colspan="3" align="center"><strong>INTERNATIONAL SEARCH REPORT</strong></td><td>International application No.<br>PCT/JP2010/052014</td></tr>
</table>

| A. CLASSIFICATION OF SUBJECT MATTER |
|---|
| *D06M11/71*(2006.01)i, *D06M11/46*(2006.01)i, *D06M11/57*(2006.01)i, *D06M14/22*(2006.01)i, *D06M15/263*(2006.01)i, *D06M15/267*(2006.01)i |

According to International Patent Classification (IPC) or to both national classification and IPC

| B. FIELDS SEARCHED |
|---|
| Minimum documentation searched (classification system followed by classification symbols)<br>D06M10/00-11/84, D06M13/00-15/715, B32B1/00-43/00 |

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)
JSTPlus/JMEDPlus/JST7580(JDreamII)

| C. DOCUMENTS CONSIDERED TO BE RELEVANT |
|---|

| Category* | Citation of document, with indication, where appropriate, of the relevant passages | Relevant to claim No. |
|---|---|---|
| A | JP 2006-200082 A  (Teijin Fibers Ltd.),<br>03 August 2006 (03.08.2006),<br>entire text<br>(Family: none) | 1-16 |
| A | JP 2005-213686 A  (Toray Industries, Inc.),<br>11 August 2005 (11.08.2005),<br>entire text<br>(Family: none) | 1-16 |
| A | JP 2007-136342 A  (Tokai Senko Kabushiki Kaisha),<br>07 June 2007 (07.06.2007),<br>entire text<br>(Family: none) | 1-16 |

☒ Further documents are listed in the continuation of Box C.      ☐ See patent family annex.

| | |
|---|---|
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>02 April, 2010 (02.04.10) | Date of mailing of the international search report<br>13 April, 2010 (13.04.10) |
|---|---|
| Name and mailing address of the ISA/<br>   Japanese Patent Office | Authorized officer |
| Facsimile No. | Telephone No. |

Form PCT/ISA/210 (second sheet) (July 2009)

<table>
<tr><td colspan="2">**INTERNATIONAL SEARCH REPORT**</td><td>International application No.<br>PCT/JP2010/052014</td></tr>
</table>

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2003-25516 A  (Hiraoka & Co., Ltd.),<br>29 January 2003 (29.01.2003),<br>entire text<br>(Family: none) | 1-16 |
| A | JP 7-101711 A  (Daiichi Kigenso Kagaku Kogyo Co., Ltd.),<br>18 April 1995 (18.04.1995),<br>entire text<br>(Family: none) | 1-16 |
| P,A | JP 2009-184506 A  (Shinshu University),<br>20 August 2009 (20.08.2009),<br>entire text<br>(Family: none) | 1-16 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000119957 A
- JP H10216210 A

- JP 2009031931 A